# EUROPÄISCHE PATENTANMELDUNG

(11) **EP 4 002 221 A1**
(43) Veröffentlichungstag der Anmeldung: **25.05.2022**
(21) Anmeldenummer: 20207873.9
(22) Anmeldetag: 16.11.2020
(51) Int. Cl.: G06N 3/08, G06K 9/00, G06K 9/62

(54) **TRAININGSDATENGENERATOR UND VERFAHREN ZUM GENERIEREN VON TRAININGSDATENSÄTZEN**

(71) Anmelder: Siemens Aktiengesellschaft, 80333 München (DE)
(72) Erfinder: Allmaras, Moritz, 81673 München (DE); Heinzerling, Till, 76185 Karlsruhe (DE); Held, Harald, 85461 Bockhorn (DE); Herzog, Ulli, 66978 Leimen (DE); Heß, Sascha, 76467 Bietigheim (DE); Knittel, Julian, 75433 Maulbronn (DE); Limmer, Steffen, 80687 München (DE); Schenk, Tim, 84034 Landshut (DE); Wehrstedt, Jan Christoph, 81829 München (DE); Wendelberger, Klaus, 68789 St. Leon-Rot (DE)

(57) **Zusammenfassung**

Die Erfindung betrifft einen Trainingsdatengenerator umfassend eine Schnittstelle, die eingerichtet ist, aus bereitgestellten, digitalen Anlagenplänen für technische Anlagen extrahierte Symbole einzulesen, wobei die Anlagenpläne jeweils einen Aufbau und/oder eine Funktionalität einer technischen Anlage mittels Symbole abbilden und gleichartig sind, ein Speichermodul, das derart eingerichtet ist, die extrahierten Symbole zu speichern, ein Selektionsmodul, das derart eingerichtet ist, mittels eines Zufallsgenerators zufällig eine Symbolteilmenge der gespeicherten Symbole zu selektieren, einen Generator, der derart eingerichtet ist, mindestens einen synthetischen Anlagenplan in Abhängigkeit der selektierten Symbolteilmenge zu generieren, und ein Ausgabemodul, das derart eingerichtet ist, den mindestens einen synthetischen Anlagenplan als Trainingsdaten zum Trainieren eines trainierbaren Bilderkennungsmoduls auszugeben, wobei das trainierbare Bilderkennungsmodul eingerichtet ist, anhand eines analogen Anlagenplans einer technischen Anlage einen digitalen Anlagenplan zu generieren.

## Beschreibung

Die Erfindung betrifft einen Trainingsdatengenerator und ein Verfahren zum Generieren von Trainingsdatensätzen zum Trainieren eines trainierbaren Bilderkennungsmoduls, sowie ein Computerprogrammprodukt.

Für eine Errichtung, ein Design, einen Betrieb und/oder eine Wartung von technischen Anlagen und Systemen werden schematische Pläne/Anlagenpläne benötigt. Diese liegen in der Regel für bestehende Anlagen nur in Papierform oder als Grafikdatei vor. Außerdem existiert kein standardisiertes Austauschformat, so dass Pläne oft für dieselben technischen Objekte, Geräte und/oder Funktionen unterschiedliche Zeichen/Symbolen aufweisen oder unterschiedliche Konventionen bei der Erzeugung oder der Wartung solcher Pläne befolgt werden.

Für Wartung, Aus- oder Umbau solcher technischen Anlagen wird die Planinformation als digitales, editierbares Modell in einem Engineering-Werkzeug benötigt, d.h. bestehende Papierpläne müssen zu diesem Zweck digitalisiert werden. Bei der Digitalisierung ist insbesondere die Erkennung und/oder Klassifizierung von auf den Plandokumenten abgebildeten Symbolen wichtig. Für die Digitalisierung können insbesondere Verfahren des überwachten Maschinellen Lernens genutzt werden. Diese werden in der sog. Trainingsphase durch Beispielpläne mit vorhandenen Annotationen der dort abgebildeten Symbole, ihres Typs und ihrer Positionen trainiert, um dann später in der sog. Inferenzphase auf neuen, unbekannten Plandokumenten die entsprechenden Symbole wiedererkennen zu können. Um mit solchen Verfahren eine hohe Erkennungsgenauigkeit zu erreichen, müssen sie auf einer sehr großen Anzahl von annotierten Planbeispielen trainiert werden. Allerdings ist oft eine solch große Anzahl von Trainingsdaten, d.h. von Anlagenplänen bzw. Symbolbeispielen, nicht gewährleistet.

Es ist daher eine Aufgabe der Erfindung, eine Möglichkeit zu schaffen, eine ausreichende Anzahl von Trainingsdaten bereitzustellen, um beispielsweise für ein trainiertes Verfahren zur Digitalisierung von solchen Anlagenplänen eine hohe Erkennungsgenauigkeit zu erreichen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung einen Trainingsdatengenerator umfassend
- eine Schnittstelle, die eingerichtet ist, aus bereitgestellten, digitalen Anlagenplänen für technische Anlagen extrahierte Symbole einzulesen, wobei die Anlagenpläne jeweils einen Aufbau und/oder eine Funktionalität einer technischen Anlage mittels Symbole abbilden und gleichartig sind,
- ein Speichermodul, das derart eingerichtet ist, die extrahierten Symbole zu speichern,
- ein Selektionsmodul, das derart eingerichtet ist, mittels eines Zufallsgenerators zufällig eine Symbolteilmenge der gespeicherten Symbole zu selektieren,
- einen Generator, der derart eingerichtet ist, mindestens einen synthetischen Anlagenplan in Abhängigkeit der selektierten Symbolteilmenge zu generieren,
   und
- ein Ausgabemodul, das derart eingerichtet ist, den mindestens einen synthetischen Anlagenplan als Trainingsdaten zum Trainieren eines trainierbaren Bilderkennungsmoduls auszugeben, wobei das trainierbare Bilderkennungsmodul eingerichtet ist, anhand eines analogen Anlagenplans einer technischen Anlage einen digitalen Anlagenplan zu generieren.
Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Ein erfindungsgemäßer Trainingsdatengenerator kann beispielsweise einen Prozessor umfassen. Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "digitalen Anlagenplan" - im Folgenden auch als (digitaler) Plan bezeichnet - kann im Zusammenhang mit der Erfindung insbesondere ein Schaltplan, ein Stromlaufplan, ein Funktionsplan, oder ein Rohrleitungsdiagramm/ Rohrleitungs- und Instrumentenfließschema (engl. Piping-and-Instrumation-Diagram, kurz: P&ID) für ein technisches System verstanden werden. Der Anlagenplan bildet das technische System, dessen Eigenschaften, dessen Funktionen und/oder diesem technischen System zugeordnete Informationen schematisch ab. Ein Anlagenplan kann insbesondere in digitalisierter Form vorliegen, wie z.B. als PDF-Datei.

Unter einem "technischen System" kann im Zusammenhang mit der Erfindung insbesondere eine technische Anlage, wie z.B. eine industrielle Anlage/eine Fabrikanlage, ein technisches Gerät oder eine Maschine oder ein Infrastrukturnetz, wie z.B. ein Wassernetz, eine Verfahrenstechnische Anlage aber auch Teilaspekte wie Stromlaufpläne, Logikpläne oder HVACs, verstanden werden.

Unter einem "synthetischen Anlagenplan" kann im Zusammenhang mit der Erfindung insbesondere ein künstlich hergestellter Anlagenplan verstanden werden, der beispielsweise kein reales technisches System abbildet bzw. keinem realen technischen System zugeordnet ist. Insbesondere kann ein synthetischer Anlagenplan zunächst als Netzliste, d.h. eine textuelle Beschreibung der beispielsweise elektrischen, verfahrenstechnischen, und/oder logischen Verbindungen zwischen Planelementen, aus selektierten Symbolen erstellt werden. In anderen Worten, ein synthetischer Anlagenplan kann auch lediglich als Netzliste vorliegen.

Ein synthetischer Anlagenplan ist vorzugsweise einem digitalisierten Anlagenplan ähnlich, d.h. weist vergleichbare Eigenschaften und/oder Symbole auf. Beispielsweise unterscheidet sich ein synthetischer Anlagenplan von einem Anlagenplan einer technischen Anlage in einer Symbolanzahl. Ein synthetischer Anlagenplan kann beispielsweise Ergänzungen oder Modifikationen zu einem Anlagenplan eines technischen Systems aufweisen.

Ein Plan/Anlagenplan umfasst insbesondere eine Vielzahl von Symbolen. Unter "Symbole" kann im Zusammenhang mit der Erfindung beispielsweise Zeichen, Verbindungslinien, grafische Darstellungen oder ähnliches verstanden werden, die ein technisches System oder eine technische Funktion abbilden. Beispielsweise kann ein Symbol eines Rohrleitungsdiagramms eine Pumpe, ein Ventil oder ein Rohr abbilden. Vorzugsweise liegen die Symbole bereits aus mindestens einem Anlagenplan extrahiert vor. Beispielsweise kann eine Symbolbibliothek eingelesen werden. Insbesondere können Informationen, die den Symbolen zugeordnet sind und diese beschreiben, in der Symbolbibliothek gespeichert sein.

Unter einem "trainierbaren Bilderkennungsmodul" kann im Zusammenhang mit der Erfindung beispielsweise eine Bilderkennungssoftware/ein Bilderkennungsprogramm/-algorithmus auf Basis eines maschinellen Lernverfahrens verstanden werden.

Es ist ein Vorteil der vorliegenden Erfindung, dass automatisch eine Vielzahl von synthetischen Anlagenplänen generiert werden kann, die als Eingabe-/Trainingsdaten zum Trainieren eines Bilderkennungsmoduls genutzt werden können. Es kann eine beliebige Anzahl von realistischen Trainingsbeispielen erzeugt werden. Dazu wird aus bestehenden, digitalisierten Anlagenplänen Symbole extrahiert. Eine Teilmenge der Symbole wird zufällig selektiert und zu einem synthetischen Anlagenplan angeordnet. Insbesondere kann aus der Teilmenge eine Netzliste der selektierten Symbole erstellt und daraus ein synthetischer Anlagenplan, beispielsweise in grafischer Darstellung, generiert werden.

Ein weiterer Vorteil ergibt sich, da insbesondere eine (manuelle) Beschreibung/Klassifizierung einzelner Symbolinstanzen (und ihrer Anschlusspunkte) einen wesentlich geringeren technischen Aufwand darstellt als die (manuelle) Beschreibung/Klassifizierung einer großen Anzahl von Bestandsplänen. Die Beschreibung/Klassifizierung kann also von einer (aufwändigen) Instanz-basierten Vorgehensweise auf eine effiziente typ-basierte Vorgehensweise umgestellt werden. Somit wird ein vielfach höherer Grad an Flexibilität, Skalierung, Durchsatz und Automatisierung erreicht.

In einer Ausführungsform des Trainingsdatengenerators kann die Schnittstelle weiter eingerichtet sein, zusätzlich mindestens eine der folgenden, einem jeweiligen Symbol zugeordnete Zusatzinformationen einzulesen und an das Speichermodul zum Speichern dieser Zusatzinformation zu übermitteln:
- eine einem Symbol zugeordnete Information über eine Verbindungsmöglichkeit zu einem anderen Symbol,
- eine Information zu einer einem Symbol zugeordneten Annotation, wie z.B. einer Beschriftung,
- eine Darstellungsform des Symbols und/oder Teil des Symbols und/oder
- eine Darstellungsinformation des Symbols.

Damit kann eine realistische oder übliche Gestaltungsform der jeweiligen Symbole erzielt werden. Diese Zusatzinformationen können beispielsweise in einer Symbolbibliothek hinterlegt sein. Außerdem ermöglicht dies eine größere Variation der Symbole zu erzielen. So kann beispielsweise eine Annotation oder eine Darstellungsform eines Symbols modifiziert werden, um verschiedene Symboldarstellung und somit auch verschiedene synthetische Anlagenpläne zu generieren.

In einer Ausführungsform des Trainingsdatengenerators kann die Schnittstelle weiter eingerichtet sein, für eine Annotation eine relative Position zu dem Symbol und/oder Maße der Annotation einzulesen.

Damit kann eine übliche Darstellung eines Symbols gespeichert und somit einfach reproduziert werden.

In einer Ausführungsform des Trainingsdatengenerators kann der Generator weiter eingerichtet sein, mindestens einen synthetischen Anlagenplan in Abhängigkeit einer Zusatzinformation zu generieren.

Beispielsweise kann mindestens eine einem Symbol zugeordnete Zusatzinformation bei der Generierung eines synthetischen Anlagenplans berücksichtigt werden. Dies ermöglicht die Generierung realistischer synthetischer Anlagenpläne.

In einer Ausführungsform des Trainingsdatengenerators kann die Schnittstelle weiter eingerichtet sein, mindestens eine bereitgestellte Positionierungsregel für die Positionierung eines Symbols in einem Anlagenplan einzulesen.

In einer Ausführungsform kann die mindestens eine Positionierungsregel auf
- eine relative Positionierung des Symbols auf einem Anlagenplan,
- eine relative Positionierung des Symbols zu einer Annotation,
- eine vorgegebene Kopplung zu einem weiteren Symbol, und/oder
eine symbolspezifische Abhängigkeit von mindestens einem weiteren Symbol gerichtet sein.

In einer Ausführungsform des Trainingsdatengenerators kann der Generator weiter eingerichtet sein, den synthetischen Anlagenplan in Abhängigkeit mindestens einer Positionierungsregel zu generieren.

Die Plangenerierung unter Berücksichtigung einer Positionierungsregel ermöglicht beispielsweise Symbolverbindungen und/oder Platzierungen zu verhindern, die nicht zulässig oder weniger erwünscht sind. Außerdem können die Lesbarkeit und die Übersichtlichkeit des synthetischen Anlagenplans erhöht werden.

In einer Ausführungsform des Trainingsdatengenerators kann der Generator weiter eingerichtet sein, den synthetischen Anlagenplan unter Berücksichtigung mindestens einer vorgegebenen Randbedingung des Anlagenplans zu generieren.

Eine Randbedingung kann beispielsweise eine vorgegebene Größe oder ein vorgegebenes Format des Anlagenplans sein. Außerdem kann eine Randbedingung die Positionierung von Verbindungslinien betreffen, so dass die Verbindungslinien beispielsweise möglichst kurz sind, wenige Kreuzungspunkte aufweisen und/oder lediglich aus aufeinanderfolgenden verbundenen horizontalen oder vertikalen Linienstücken bestehen. Dies kann insbesondere die Lesbarkeit und Übersichtlichkeit eines synthetischen Anlagenplans erhöhen.

In einer Ausführungsform des Trainingsdatengenerators kann der Generator weiter eingerichtet sein, einen synthetischen Anlagenplan und/oder lediglich mindestens ein Symbol der synthetischen Anlagenplans mittels bereitgestellter Artefakte zu ergänzen und/oder zu modifizieren.

In einer Ausführungsform des Trainingsdatengenerators das Ausgabemodul eingerichtet sein, diesen ergänzten und/oder modifizierten synthetischen Anlagenplan als einen zusätzlichen synthetischen Anlagenplan auszugeben.

Ein Artefakt kann im Zusammenhang mit der Erfindung beispielsweise eine Rotation, eine Kontrastmodifikation, eine Verzerrung oder eine Störlinie sein. Solche Artefakte sind in der Regel auf Papierplänen und/oder digitalisierten Anlagenplänen zu finden. Der Generator ermöglicht synthetische Pläne zu generieren, die ähnliche Artefakte aufweisen. Dies ermöglicht die Erstellung von realistischen Trainingsbeispielen und es erhöht die Anzahl von Trainingsbeispielen.

In einer Ausführungsform kann der Trainingsdatengenerator weiter ein Grafikmodul umfassen, das derart eingerichtet ist, eine grafische Darstellung des synthetischen Anlagenplans zu erstellen und das Ausgabemodul weiter eingerichtet ist, die grafische Darstellung des synthetischen Anlagenplans auszugeben.

Dabei ist ein Vorteil, dass für eine grafische Darstellung eines derart generierten synthetischen Plans Positionen und Ausmaße der auf dem Anlagenplan vorkommenden Symbole, Verbindungslinien und/oder Annotationen bekannt sind. Demnach kann ein solcher synthetischer Anlagenplan vorteilhaft als Eingabedaten zum Training eines Bilderkennungsmoduls genutzt werden, da keine (manuelle) Extraktion und/oder Kennzeichnung von Symbolen notwendig ist.

In einer Ausführungsform können die Anlagenpläne Stromlaufpläne, Funktionspläne, und/oder Rohrleitungs- und Instrumentenfließschemata umfassen.

Gemäß einem zweiten Aspekt betrifft die Erfindung ein computerimplementiertes Verfahren zum Generieren von Trainingsdatensätzen zum Trainieren eines trainierbaren Bilderkennungsmoduls, mit den Verfahrensschritten:
- Einlesen von aus bereitgestellten, digitalen Anlagenplänen für technische Anlagen extrahierten Symbolen, wobei die Anlagenpläne jeweils einen Aufbau und/oder eine Funktionalität einer technischen Anlage mittels Symbole abbilden und gleichartig sind,
- Speichern der extrahierten Symbole,
- zufälliges Selektieren mittels eines Zufallsgenerators eine Symbolteilmenge der gespeicherten Symbole,
- Generieren mindestens eines synthetischen Anlagenplan in Abhängigkeit der selektierten Symbolteilmenge
   und
- Ausgeben des mindestens einen synthetischen Anlagenplans als Trainingsdaten zum Trainieren eines trainierbaren Bilderkennungsmoduls auszugeben, wobei das trainierbare Bilderkennungsmodul eingerichtet ist, anhand eines analogen Anlagenplans einer technischen Anlage einen digitalen Anlagenplan zu generieren.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1: ein Ausführungsbeispiel eines erfindungsgemäßen Trainingsdatengenerators in schematischer Blockdarstellung;
- Fig. 2: ein Ausführungsbeispiel eines erfindungsgemäßen Verfahrens zum Generieren von Trainingsdatensätzen zum Trainieren eines trainierbaren Bilderkennungsmoduls; und
- Fig. 3: ein weiteres Ausführungsbeispiel eines erfindungsgemäßen Verfahrens zum Generieren von Trainingsdatensätzen zum Trainieren eines trainierbaren Bilderkennungsmoduls.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

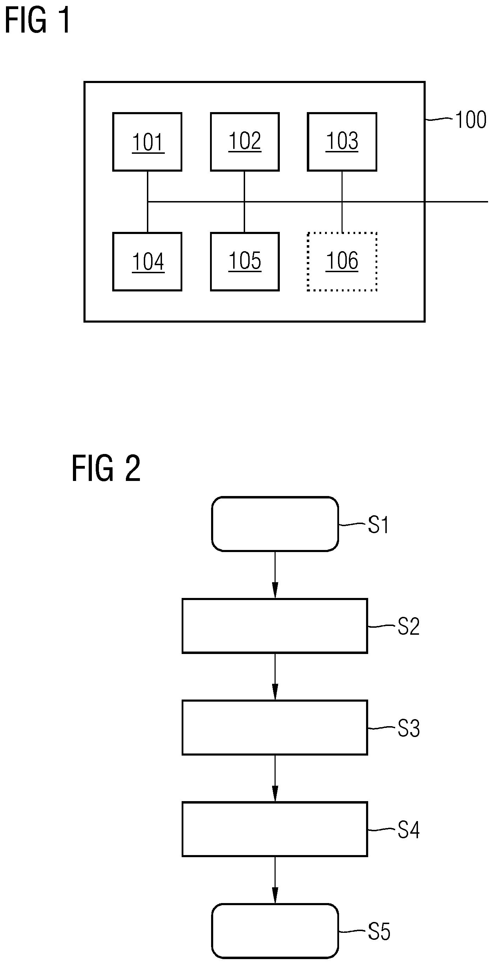

Figur 1 zeigt in schematischer Blockdarstellung ein Ausführungsbeispiel eines erfindungsgemäßen Trainingsdatengenerator 100.

Der Trainingsdatengenerator 100 kann zumindest teilweise in Hardware und/oder Software ausgestaltet sein. Vorzugsweise kann der Trainingsdatengenerator mit einem trainierbaren Bilderkennungsmodul gekoppelt werden, so dass erzeugte Trainingsdaten zum Training des Bilderkennungsmodul übermittelt werden können.

Der Trainingsdatengenerator 100 umfasst eine Schnittstelle 101, die derart eingerichtet ist, aus bereitgestellten, digitalen Anlagenplänen für technische Anlagen extrahierte Symbole einzulesen, wobei die Anlagenpläne jeweils einen Aufbau und/oder eine Funktionalität einer technischen Anlage mittels Symbole abbilden und gleichartig sind. Anlagenpläne können beispielsweise Stromlaufpläne, Funktionspläne, und/oder Rohrleitungs- und Instrumentenfließschemata sein. Vorzugsweise werden lediglich Symbole aus Anlagenplänen des gleichen Typs, wie z.B. lediglich Stromlaufpläne, eingelesen, d.h. von Plänen, die sich ähneln.

Beispielsweise kann über die Schnittstelle 101 mindestens eine Symbolbibliothek zu einem Anlagenplantyp eingelesen werden, die eine Vielzahl von Symbolen für gleichartige Anlagenpläne umfasst. Die Extraktion der Symbole aus den bestehenden Anlagenplänen kann insbesondere als vorgelagerter Schritt durchgeführt werden.

Die Schnittstelle 101 kann weiter eingerichtet sein, zusätzlich mindestens eine der folgenden, einem jeweiligen Symbol zugeordnete Zusatzinformationen einzulesen und an das Speichermodul zum Speichern dieser Zusatzinformation zu übermitteln:
- eine einem Symbol zugeordnete Information über eine Verbindungsmöglichkeit zu einem anderen Symbol, wie z.B. eine vorhandene Schnittstelle/ ein Port,
- eine Information zu einer einem Symbol zugeordneten Annotation, wie z.B. eine Beschriftung,
- eine Darstellungsform des Symbols und/oder Teil des Symbols, wie z.B. eine Rotation oder Spiegelung,
   und/oder
- eine Darstellungsinformation des Symbols, wie z.B. Größe.

Außerdem kann über die Schnittstelle 101 für eine Annotation eine relative Position zu dem Symbol und/oder Maße der Annotation eingelesen werden.

Die Schnittstelle 101 kann weiter eingerichtet sein, mindestens eine bereitgestellte Positionierungsregel für die Positionierung eines Symbols in einem Anlagenplan einzulesen. Eine Positionierungsregel kann beispielsweise auf eine relative Positionierung des Symbols auf einem Anlagenplan, eine relative Positionierung des Symbols zu einer Annotation, eine vorgegebene Kopplung zu einem weiteren Symbol, und/oder eine symbolspezifische Abhängigkeit von mindestens einem weiteren Symbol gerichtet sein.

Weiter umfasst der Trainingsdatengenerator ein Speichermodul 102, das derart eingerichtet ist, die extrahierten Symbole zu speichern.

Der Trainingsdatengenerator umfasst außerdem ein Selektionsmodul 103, das derart eingerichtet ist, mittels eines Zufallsgenerators zufällig eine Symbolteilmenge der gespeicherten Symbole zu selektieren. Das Selektionsmodul 103 ist insbesondere mit dem Speichermodul 102 gekoppelt. Die selektierte Symbolteilmenge wird vom Selektionsmodul 103 an einen Generator 104 des Trainingsdatengenerators 100 übermittelt.

Der Generator 104 ist derart eingerichtet, mindestens eine Netzliste oder einen synthetischen Anlagenplan in Abhängigkeit der selektierten Symbolteilmenge zu generieren. Insbesondere kann der Generator 104 eine Netzliste oder einen synthetischen Anlagenplan in Abhängigkeit mindestens einer eingelesenen Zusatzinformation, die einem Symbol zugeordnet ist, und/oder mindestens einer Positionierungsregel generieren. Zusätzlich kann bei der Generierung der Netzliste oder des synthetischen Anlagenplans mindestens eine vorgegebene Randbedingung berücksichtigt werden. Eine Randbedingung kann beispielsweise ein Format des Anlagenplans sein. Eine Randbedingung kann insbesondere abhängig vom Typ des Anlagenplans sein.

Der Generator 104 kann außerdem einen synthetischen Anlagenplan und/oder lediglich mindestens ein Symbol der synthetischen Anlagenplans mittels bereitgestellter Artefakte ergänzen und/oder modifizieren. Ein Artefakt kann beispielsweise einen Kontrast und/oder eine Verzerrung eines Symbols betreffen.

Weiter umfasst der Trainingsdatengenerator 100 ein Ausgabemodul 105, das derart eingerichtet ist, die Netzliste, den mindestens einen synthetischen Anlagenplan und/oder einen mittels Artefakte modifizierten/ergänzten synthetischen Anlagenplan als Trainingsdaten zum Trainieren eines trainierbaren Bilderkennungsmoduls auszugeben, wobei das trainierbare Bilderkennungsmodul eingerichtet ist, anhand eines analogen Anlagenplans einer technischen Anlage einen digitalen Anlagenplan zu generieren.

Der Trainingsdatengenerator 100 kann weiter noch ein Grafikmodul 106 umfassen. Der Trainingsdatengenerator 100 kann auch mit solch einem Grafikmodul 106 lediglich gekoppelt sein. Das Grafikmodul 106 ist derart eingerichtet, eine grafische Darstellung des synthetischen Anlagenplans zu erstellen. Beispielsweise kann eine grafische Darstellung aus der Netzliste erstellt werden.

Figur 2 zeigt ein Ablaufdiagramm eines erfindungsgemäßen, computerimplementierten Verfahrens zum Generieren von Trainingsdatensätzen zum Trainieren eines trainierbaren Bilderkennungsmoduls, das vorzugsweise eingerichtet ist, anhand eines analogen Anlagenplans einer technischen Anlage einen digitalen Anlagenplan zu generieren. Mit dem Verfahren können Trainingsdaten für das Bilderkennungsmodul generiert werden, um dessen Erkennungsgenauigkeit zu verbessern.

Zunächst wird im ersten Schritt S1 eine Vielzahl von Anlagensymbolen eingelesen. Diese sind vorzugsweise aus bereitgestellten, bereits digitalisierten Anlagenplänen extrahiert. Beispielsweise kann eine Symbolbibliothek für einen vorgegebenen Anlagenplantyp, wie z.B. Stromlaufpläne, bereitgestellt werden.

Im nächsten Schritt S2 werden die extrahierten Symbole (zwischen)gespeichert.

Als nächstes, Schritt S3, wird mittels eines Zufallsgenerators zufällig eine Symbolteilmenge der gespeicherten Symbole selektiert. Der Zufallsgenerator kann beispielsweise eine Menge von Zufallszahlen ausgeben. Diese Zufallszahlen können genutzt werden, Symbole aus der Symbolbibliothek zu selektieren.

Im nächsten Schritt S4 wird in Abhängigkeit der selektierten Symbolteilmenge mindestens eine Netzliste bzw. ein synthetischer Anlagenplan generiert. Vorzugsweise wird eine Vielzahl von verschiedenen Netzlisten bzw. synthetischen Anlagenplänen generiert.

Die generierten synthetischen Anlagenpläne können insbesondere in grafischer Darstellung ausgegeben werden. Außerdem kann ein synthetischer Anlagenplan mittels Artefakte derart modifiziert werden, so dass ein weiterer synthetischer Anlagenplan ausgegeben werden kann.

Als nächstes, Schritt S5, werden die generierten synthetischen Anlagenpläne als Trainingsdaten zum Trainieren eines trainierbaren Bilderkennungsmoduls ausgegeben. Zusätzlich oder alternativ können auch lediglich die erstellten Netzlisten ausgegeben werden. Beispielsweise kann anschließend das trainierbare Bilderkennungsmodul mittels der Trainingsdaten trainiert werden, anhand eines analogen Anlagenplans, z.B. eines gescannten Papierplans, einer technischen Anlage einen digitalen Anlagenplan zu generieren.

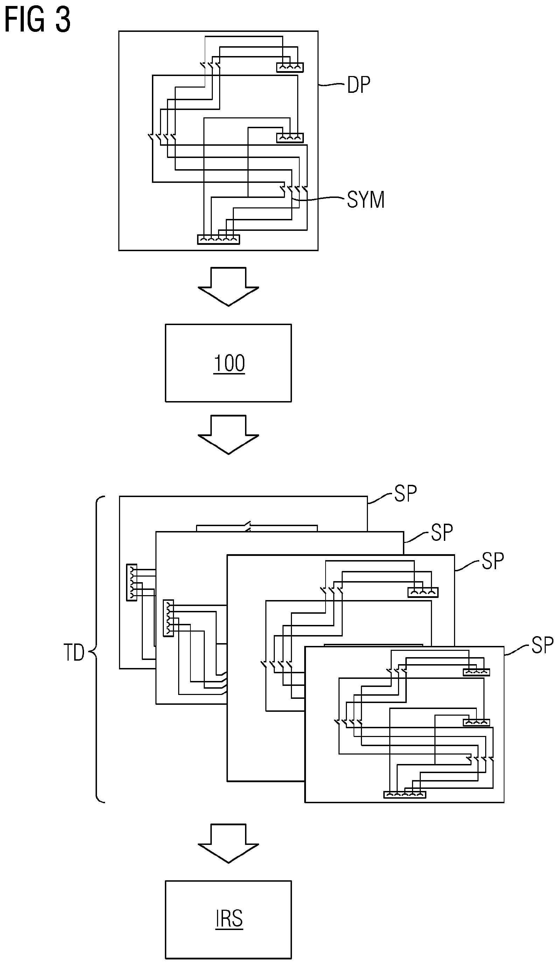

Figur 3 zeigt ein weiteres Ausführungsbeispiel der Erfindung in schematischer Darstellung.

Es ist beispielhaft ein digitaler Anlagenplan DP, der eine Vielzahl von Symbolen SYM umfasst gezeigt. Beispielsweise kann es sich hierbei um einen digitalisierten Papierplan handeln. Die Symbole können aus dem digitalen Anlagenplan DP extrahiert und beispielsweise als Symbolbibliothek einem Trainingsdatengenerator 100 bereitgestellt werden. Vorzugsweise wird eine Vielzahl von Symbolen SYM aus einer Vielzahl von digitalen Anlagenplänen DP bereitgestellt.

Zusätzlich kann zu einem extrahierten Symbol SYM eine dem Symbol zugeordnete Zusatzinformation extrahiert und bereitgestellt werden. Eine Zusatzinformation kann beispielsweise eine Information über eine Verbindungsmöglichkeit zu einem anderen Symbol, z.B. eine verfügbare Schnittstelle, umfassen. Eine Zusatzinformation kann auch eine Information zu einer dem Symbol zugeordneten Annotation, z.B. ein Name oder Bezeichnung, sein. Außerdem kann eine Zusatzinformation eine Darstellungsform des Symbols und/oder Darstellungsinformation des Symbols betreffen, wie z.B. eine Symbolgröße, Schriftgröße oder Formatierung (z.B. gestrichelte Linien).

Alternativ oder zusätzlich kann eine Positionierungsregel zu einem extrahierten Symbol bereitgestellt werden. Eine Positionierungsregel kann beispielsweise eine relative Positionierung des Symbols auf dem Anlagenplan, zu einer Annotation, eine vorgegebene Kopplung zu einem weiteren Symbol und/oder eine symbolspezifische Abhängigkeit von mindestens einem weiteren Symbol betreffen. So kann beispielsweise ein jeweiliges Symbol dadurch charakterisiert sein, dass es typischerweise in einem vorgegebenen Randbereich des Anlagenplans positioniert ist, eine Symbolbezeichnung sich in einer vorgegebenen relativen Position zu dem Symbol befindet und/oder mit einem vorgegebenen weiteren Symbol gekoppelt werden kann.

Demnach kann beispielsweise durch Ausschneiden aus bestehenden digitalen Anlagenplänen DP eine Bibliothek von Symbolen SYM zusammengestellt werden, die die grafische Ausprägung der Symbole SYM, die Lage der Anschlusspunkte (die der Verbindung zu Anschlusspunkten anderer Symbole dienen) und die Position von Annotationen wie Objekt- oder Anschlussnamen enthalten. Zudem können Informationen zu Breite, Farbe und Darstellungsweise (z.B. durchgezogen, gestrichelt, gepunktet etc.) der bestehenden Verbindungslinienarten sowie zur Darstellung von Kreuzungspunkten der Bibliothek hinzugefügt werden. Für Annotationen kann weiter festgelegt werden, ob ihre Position fest oder variabel in Relation zum Symbol bzw. dem zugehörigen Anschlusspunkt ist. Außerdem, falls gegeben, welcher Schriftart mit dazugehörigen Parametern (Größe, Zeichenabstand etc.) für die Annotation verwendet wird. Falls der in Annotationen enthaltene Text bestimmten Regeln folgt (z. B., immer aus drei Zeichen besteht oder mit einem Großbuchstaben beginnt), kann für eine solche Regel ein regulärer Ausdruck hinterlegt werden. Es kann auch gespeichert werden, ob ein Symbol nur in seiner ursprünglichen Orientierung oder auch in gedrehten und/oder gespiegelten Varianten vorkommt, und welche Annotationen mitrotiert oder in der originalen Orientierung beibehalten werden. Außerdem können beispielsweise Positionierungsregeln für die Verschaltung von Symbolen in den synthetischen Plänen definiert werden. Beispielsweise können Anschlusspunkte unterschiedliche Typen aufweisen und nur mit Verbindungslinien einer bestimmten Darstellungsweise verbunden werden. Weiterhin kann für eine Gruppe von Anschlusspunkten festgelegt werden, dass die Gruppe in der Art eines Busses parallel mit einer anderen Gruppe von Anschlusspunkten verschaltet werden muss. Diese Informationen/Zusatzinformationen können den jeweiligen Symbolen SYM zugeordnet und derart gespeichert werden.

Die extrahierten Symbole SYM und die zugeordneten Zusatzinformationen werden in den Trainingsdatengenerator 100 eingegeben. Dort wird aus dieser Symbolmenge zufällig eine Teilsymbolmenge selektiert. Beispielsweise können Netzlisten mit zufällig gewählten Symbolen aus der Bibliothek, einer zufälligen, aber den gespeicherten Regeln folgenden Verschaltung ihrer Anschlusspunkte sowie zufällig gewählten (aber der spezifizierten Syntax/Format genügende) Annotationen erzeugt werden. Dies kann insbesondere unabhängig davon sein, ob die erzeugte Netzliste in Bezug auf die beschriebene Verschaltung von durch die Symbole beschriebenen Komponenten ein sinnvolles System darstellen, oder ob die erzeugte Verschaltung überhaupt physikalisch möglich ist.

Der Trainingsdatengenerator 100 generiert anhand der selektierten Symbole mindestens eine Netzliste, aus der ein synthetischer Anlagenplan SP erstellt wird. Dazu kann ein Algorithmus zum Erzeugen der Netzliste bzw. des synthetischen Anlagenplans eingesetzt werden. Dabei werden insbesondere die den Symbolen zugeordneten Positionierungsregeln und/oder vorgegebene Randbedingungen für den jeweiligen zu generierenden Anlagenplan berücksichtigt. So kann dieser Algorithmus die Symbole, Verbindungen und Annotationen aus der Netzliste so auf einer Planseite platzieren, dass beispielsweise die Verbindungslinien möglichst kurz sind und möglichst wenig Kreuzungspunkte entstehen, sowie sich keine unnötigen Überlappungen ergeben. Als Randbedingung kann der Algorithmus außerdem berücksichtigen, dass Verbindungslinien nur aus aufeinanderfolgenden verbundenen horizontalen oder vertikalen Linienstücken bestehen, was bei vielen schematischen Plänen aus Gründen der Übersichtlichkeit wünschenswert ist. Vorzugsweise wird eine Vielzahl von synthetischen Anlagenplänen generiert und in grafischer Darstellungsform ausgegeben.

Ausgehend von der Netzliste und dem generierten Layout können jeweils grafische Darstellungen der synthetischen Anlagenpläne generiert werden. Dabei sind, da die Anlagenpläne aus der Bibliothek synthetisiert werden, die Positionen und Ausmaße der auf den Anlagenplänen vorkommenden Symbole, Verbindungslinien und Annotationen bekannt. Dies erleichtert insbesondere das Training des Bilderkennungsmoduls IRS, da demnach sowohl Eingabedaten als auch Ausgabedaten für das Training vorliegen.

Außerdem können durch Augmentierung die generierten synthetischen Anlagenpläne um weitere typische Artefakte, wie z.B. Rotation, Kontrast, Verzerrungen, Störlinien, ergänzt werden. Typischerweise weisen reale Anlagenpläne solche Artefakte auf. Durch diese Modifikation bzw. Ergänzung können die synthetischen Anlagenpläne um weitere Beispiele ergänzt und/oder realistisch gestaltet werden.

Die generierten synthetischen Anlagenpläne SP werden als Trainingsdaten TD ausgegeben. Vorzugsweise können die Trainingsdaten TD zum Trainieren eines trainierbaren Bilderkennungsmoduls IRS genutzt werden. Die Trainingsdaten umfassen vorzugsweise die synthetischen Anlagenpläne und jeweils zugeordnete Informationen zu den in den Anlagenplänen enthaltenen Symbolen und zugeordneten Annotationen. Das trainierbare Bilderkennungsmodul IRS umfasst vorzugsweise ein Verfahren zum Maschinellen Lernen, z.B. ein künstliches neuronales Netz. Dieses kann mittels der Trainingsdaten TD trainiert werden. Beim Training wird dem trainierbaren Bilderkennungsmodul IRS beispielsweise die synthetischen Anlagenpläne als Eingabedaten übergeben. Zielwerte, d.h. Ausgabedaten des Bilderkennungsmoduls IRS, sind beispielsweise Symbole und zugeordnete Annotationen.

Ein solches trainiertes Bilderkennungsmodul IRS kann eingerichtet sein, anhand eines analogen Anlagenplans einer technischen Anlage einen digitalen Anlagenplan zu generieren, d.h. beispielsweise anhand eines Scans einen Papierplans digitalisieren. Dabei kann beispielsweise das trainierte Bilderkennungsmodul IRS Symbole auf dem gescannten Anlagenplan erkennen und ausgeben.

Das beschriebene Verfahren ist insbesondere vorteilhaft, da die Varianz, der die Symbole bei ihrer Verwendung unterliegen, in Form von Regeln beschrieben werden kann. In einer Symbolbibliothek können neben der grafischen Ausprägung der Symbole und Verbindungslinien an sich, die die Bausteine zur additiven Generierung der synthetischen Pläne liefern, zusätzlich noch derartige Regeln zu möglichen Verwendungsformen der Symbole und Verbindungen festgehalten werden. Die Regeln können z.B. die Platzierung von Annotationen der Symbole, die Verwendung von Verbindungen, gegenseitige Abhängigkeiten etc. betreffen. Durch solche Regeln, die beispielsweise auch durch einen Domänenexperten vorgegeben werden können, können in den generierten Trainingsbeispielen vielfältige Varianten der Platzierung von Symbolen, Verbindungen und Annotationen erzeugt werden. Damit kann das maschinelle Lernverfahren im Trainingsprozess mit zusätzlichen, zur Erkennung der Symbole hilfreichen Informationen optimiert werden. Es können zahlreiche Varianten erzeugt werden, die in realen Plänen vorkommen könnten, auch wenn sie in den tatsächlich vorliegenden Plänen nicht auftreten.

Für jedes Symbol, das auf den Trainingsbeispielen vorkommen kann, wird insbesondere lediglich eine Instanz auf einem digitalen (realen) Anlagenplan (oder der Symbol-Legende eines solchen) benötigt. Falls bestimmte Symbole vom trainierten Erkennungsalgorithmus nicht mit ausreichender Genauigkeit erkannt werden, können weitere Trainingsbeispiele, die dieses Symbol enthalten, nach Bedarf erzeugt werden. Auch für die Erkennung schwieriger Konstellationen mehrerer Symbole, Texte und Verbindungen können durch die synthetische Plangenerierung gezielt nachgestellt und der Trainingsdatensatz damit angereichert werden, um die Erkennungsgenauigkeit zu verbessern. Die synthetischen Pläne können Symbole von verschiedenen Symbolbibliotheken kombinieren, um dem maschinellen Lernverfahren eine bessere Allgemeingültigkeit zu ermöglichen. Falls neue Symbole einer zu erkennenden Symbolbibliothek hinzukommen, können dafür auf einfache Weise weitere synthetischen Anlagenpläne als Trainingsdaten generiert werden. Die synthetischen Anlagenpläne können zudem mit annotierten echten Anlagenplänen kombiniert werden, um die Trainingsdaten weiter zu ergänzen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Trainingsdatengenerator (100) umfassend
- eine Schnittstelle (101), die eingerichtet ist, aus bereitgestellten, digitalen Anlagenplänen für technische Anlagen extrahierte Symbole einzulesen, wobei die Anlagenpläne jeweils einen Aufbau und/oder eine Funktionalität einer technischen Anlage mittels Symbole abbilden und gleichartig sind,
- ein Speichermodul (102), das derart eingerichtet ist, die extrahierten Symbole zu speichern,
- ein Selektionsmodul (103), das derart eingerichtet ist, mittels eines Zufallsgenerators zufällig eine Symbolteilmenge der gespeicherten Symbole zu selektieren,
- einen Generator (104), der derart eingerichtet ist, mindestens einen synthetischen Anlagenplan in Abhängigkeit der selektierten Symbolteilmenge zu generieren,
und
- ein Ausgabemodul (105), das derart eingerichtet ist, den mindestens einen synthetischen Anlagenplan als Trainingsdaten zum Trainieren eines trainierbaren Bilderkennungsmoduls auszugeben, wobei das trainierbare Bilderkennungsmodul eingerichtet ist, anhand eines analogen Anlagenplans einer technischen Anlage einen digitalen Anlagenplan zu generieren.

2. Trainingsdatengenerator nach Anspruch 1, wobei die Schnittstelle (101) weiter eingerichtet ist, zusätzlich mindestens eine der folgenden, einem jeweiligen Symbol zugeordnete Zusatzinformationen einzulesen und an das Speichermodul zum Speichern dieser Zusatzinformation zu übermitteln:
- eine einem Symbol zugeordnete Information über eine Verbindungsmöglichkeit zu einem anderen Symbol,
- eine Information zu einer einem Symbol zugeordneten Annotation,
- eine Darstellungsform des Symbols und/oder Teil des Symbols und/oder
- eine Darstellungsinformation des Symbols.

3. Trainingsdatengenerator (100) nach Anspruch 2, wobei die Schnittstelle (101) weiter eingerichtet ist, für eine Annotation eine relative Position zu dem Symbol und/oder Maße der Annotation einzulesen.

4. Trainingsdatengenerator (100) nach einem der vorhergehenden Ansprüche, wobei der Generator (104) weiter eingerichtet ist, mindestens einen synthetischen Anlagenplan in Abhängigkeit einer Zusatzinformation zu generieren.

5. Trainingsdatengenerator (100) nach einem der vorhergehenden Ansprüche, wobei die Schnittstelle (101) weiter eingerichtet ist, mindestens eine bereitgestellte Positionierungsregel für die Positionierung eines Symbols in einem Anlagenplan einzulesen.

6. Trainingsdatengenerator nach Anspruch 5, wobei die mindestens eine Positionierungsregel auf
- eine relative Positionierung des Symbols auf einem Anlagenplan,
- eine relative Positionierung des Symbols zu einer Annotation,
- eine vorgegebene Kopplung zu einem weiteren Symbol, und/oder
eine symbolspezifische Abhängigkeit von mindestens einem weiteren Symbol gerichtet ist.

7. Trainingsdatengenerator (100) nach einem der vorhergehenden Ansprüche, wobei der Generator (104) weiter eingerichtet ist, den synthetischen Anlagenplan in Abhängigkeit mindestens einer Positionierungsregel zu generieren.

8. Trainingsdatengenerator (100) nach einem der vorhergehenden Ansprüche, wobei der Generator (104) weiter eingerichtet ist, den synthetischen Anlagenplan unter Berücksichtigung mindestens einer vorgegebenen Randbedingung des Anlagenplans zu generieren.

9. Trainingsdatengenerator (100) nach einem der vorhergehenden Ansprüche, wobei der Generator (104) weiter eingerichtet ist, einen synthetischen Anlagenplan und/oder lediglich mindestens ein Symbol der synthetischen Anlagenplans mittels bereitgestellter Artefakte zu ergänzen und/oder zu modifizieren.

10. Trainingsdatengenerator (100) nach Anspruch 9, wobei das Ausgabemodul (105) eingerichtet ist, diesen ergänzten und/oder modifizierten synthetischen Anlagenplan als einen zusätzlichen synthetischen Anlagenplan auszugeben.

11. Trainingsdatengenerator nach einem der vorhergehenden Ansprüche, weiter umfassend ein Grafikmodul (106), das derart eingerichtet ist, eine grafische Darstellung des synthetischen Anlagenplans zu erstellen und das Ausgabemodul weiter eingerichtet ist, die grafische Darstellung des synthetischen Anlagenplans auszugeben.

12. Trainingsdatengenerator (100) nach einem der vorhergehenden Ansprüche, wobei die Anlagenpläne Stromlaufpläne, Funktionspläne, und/oder Rohrleitungs- und Instrumentenfließschemata umfassen.

13. Computerimplementiertes Verfahren zum Generieren von Trainingsdatensätzen zum Trainieren eines trainierbaren Bilderkennungsmoduls, mit den Verfahrensschritten:
- Einlesen (S1) von aus bereitgestellten, digitalen Anlagenplänen für technische Anlagen extrahierten Symbolen, wobei die Anlagenpläne jeweils einen Aufbau und/oder eine Funktionalität einer technischen Anlage mittels Symbole abbilden und gleichartig sind,
- Speichern (S2) der extrahierten Symbole,
- zufälliges Selektieren (S3) mittels eines Zufallsgenerators eine Symbolteilmenge der gespeicherten Symbole,
- Generieren (S4) mindestens eines synthetischen Anlagenplan in Abhängigkeit der selektierten Symbolteilmenge
und
- Ausgeben (S5) des mindestens einen synthetischen Anlagenplans als Trainingsdaten zum Trainieren eines trainierbaren Bilderkennungsmoduls auszugeben, wobei das trainierbare Bilderkennungsmodul eingerichtet ist, anhand eines analogen Anlagenplans einer technischen Anlage einen digitalen Anlagenplan zu generieren.

14. Computerprogrammprodukt, das direkt in einen programmierbaren Computer ladbar ist, umfassend Programmcodeteile, die dazu geeignet sind, die Schritte des Verfahrens nach dem Anspruch 13 durchzuführen.
